# EUROPÄISCHE PATENTSCHRIFT

(11) **EP 1 155 330 B1**
(45) Veröffentlichungstag und Bekanntmachung des Hinweises auf die Patenterteilung: **07.03.2007**
(21) Anmeldenummer: 00987181.5
(22) Anmeldetag: 23.11.2000
(51) Int. Cl.: G01P 21/02, G01P 3/487, B60T 8/00, B60T 8/88, G01P 15/16

(54) **VERFAHREN ZUR ERKENNUNG VON SIGNALFEHLERN**
METHOD FOR RECOGNITION OF SIGNAL ERRORS
PROCEDE POUR RECONNAITRE DES ERREURS DE SIGNAUX

(30) Priorität: 20.12.1999 DE 19961504
(43) Veröffentlichungstag der Anmeldung: 21.11.2001
(73) Patentinhaber: ROBERT BOSCH GMBH, 70442 Stuttgart (DE)
(72) Erfinder: SCHNEIDER, Thomas, 71706 Markgroeningen (DE)
(86) Internationale Anmeldenummer: PCT/DE2000/004150
(87) Internationale Veröffentlichungsnummer: WO 2001/046703

(56) Entgegenhaltungen:
- EP-A- 0 589 799
- EP-A- 0 665 375
- EP-A- 0 684 480
- EP-B- 0 193 335
- US-A- 4 715 009

## Beschreibung

### Technisches Gebiet

Die Erfindung bezieht sich auf ein Verfahren zur Erkennung von Signalfehlern, insbesondere zur Erkennung von Drehzahlsignalfehlern, um Signalaussetzer zu erkennen und diese Fehler von Drehzahländerungen zu unterscheiden. Eine Unterscheidung von Signalaussetzern gegenüber Drehzahländerungen ist von Bedeutung, um ein unbeabsichtigtes oder durch die jeweilige Fahrsituation eines Kraftfahrzeuges nicht gerechtfertigtes Auslösen von Antiblockier- und Antischlupfregelsystemen an Kraftfahrzeugen zu verhindern.

### Stand der Technik

Aus EP 0 193 335 B1 ist eine Vorrichtung zur Detektion einer Anomalie eines Rotationsgeschwindigkeitssensors bekannt. Dieser wird für die Detektion einer Rotationsgeschwindigkeit eines sich drehenden Körpers verwendet. Es ist eine elektronische Einrichtung vorgesehen, welche auf ein Signal des Rotationsgeschwindigkeitssensors anspricht, um ein Intervall zwischen aufeinanderfolgenden Signalen zu messen. Ferner sind Einrichtungen vorgesehen, um eine Zeitperiode aus dem zuvor gemessenen Zeitintervall abzuschätzen, wobei innerhalb der Zeitperiode ein nachfolgendes Signal durch den Rotationsgeschwindigkeitssenor erzeugt wird. Ferner sind Vorrichtungen vorgesehen, die eine Anomalie des Rotationsgeschwindigkeitssensors detektieren, wenn das Signal nicht innerhalb der abgeschätzten Zeitspanne erzeugt wird. Bei diesem Verfahren erfolgt die Abschätzung einer neuen Zeitperiode durch Addition einer festen Zeitdifferenz zur jeweils vorhergehenden Zeitperiode. Durch die vorzunehmende Abschätzung ist das in EP 0 193 335 B1 vorgeschlagene Verfahren mit Ungenauigkeiten behaftet.

Aus der US 4,715,009 A ist eine Vorrichtung bekannt, bei der die Drehung eines rotierenden Teils erfasst wird. Dabei werden die zeitlichen Abstände von gleichmäßig auf dem rotierenden Teil verteilten Winkelmarken erfasst, wobei zur Bildung einer Bezugsmarke wenigstens eine Winkelmarke und/oder der Zwischenraum zwischen zwei Winkelmarken abweichend geformt ist. Zur Erkennung der Bezugsmarke werden jeweils durch die Winkelmarken erzeugten aufeinander folgende Zählimpulse miteinander verglichen, wobei die Bezugsmarke bei einer Abweichung des Vergleichs erkannt wird.

Aus der Schrift EP 0 665 375 A2 ist ein Verfahren zur Erfassung einer Bewegung eines drehbaren Teils bekannt, bei dem abhängig von auf dem Teil angebrachter Kennzeichen Sensorsignale erzeugt werden. Zur Erkennung einer auf dem drehbaren Teil angeordneten Markierung werden die zeitlichen Abstände der Sensorsignale mit vorhergehenden und nachfolgenden Signalabständen verglichen. Überschreitet das Ergebnis dieses Vergleichs einen festen Bezugswert, wird die Markierung erkannt.

In der Schrift EP 0 684 480 A1 wird ein Verfahren und eine Vorrichtung zur Drehzahlerfassung rotierender Teile beschrieben. Dabei wird ein mit dem rotierenden Teil verbundenes Polrad abgetastet und in ein rechteckförmiges Signal umgewandelt. Zur Bestimmung der Drehzahl werden anschließend nur diejenigen gleichsinnigen Flanken des rechteckförmigen Signals ausgewertet, deren zeitliche Abstände während eines vorgegebenen Zeitraumes um weniger als ein vorbestimmtes Maß schwanken.

Aus der EP 0 589 799 A1 ist eine Fehlererfassung zur Erkennung eines fehlerhaften Zählsignals eines Gebers bekannt. Zur Erfassung des fehlerhaften Zählsignals wird der Ausgang des Zählsignalgebers einem Vergleicher zugeleitet, der das Zählsignal mit einem dem zweifachen Wert des gleitenden Durchschnitts vorangegangener Werte entsprechenden Referenzwert vergleicht. Überschreitet das Zählsignal den Referenzwert, wird ein Fehler des Zählsignals erkannt.

Bei technischen Anwendungen, beispielsweise im Automobilbau, werden heute mehr aktive Sensoren eingesetzt. Beim Einsatz solcher Sensoren werden im zunehmenden Maße Zahnräder durch Magnetringe (Multipole) ersetzt. Bei Wartungsarbeiten oder Werkstattaufenthalten können diese Magnetringe zum Beispiel durch falsche Handhabung beschädigt oder durch an diesen anhaftenden magnetischen Schmutz beeinträchtigt werden. Der sich an den Magnetringen festsetzende Schmutz, oder Beschädigungen an den Magnetringen können zu Signalaussetzern führen. Dadurch kann es dazu kommen, daß ganze Polsegmente ausgeblendet werden und dies bei Antiblockier- oder Anschlupfregelsystemen dazu führen kann, daß dies aufgrund ausbleibender Drehzahlimpulse ansprechen, obwohl keine kritische Fahrsituation vorliegt, das ABS oder ASR jedoch Regelfunktionen ausführt.

### Darstellung der Erfindung

Mit dem erfindungsgemäß vorgeschlagenen Verfahren lassen sich Drehzahländerungen sehr leicht von Fehlern unterscheiden, ohne daß das Vorliegen eines Referenzsignales erforderlich ist. Das Rad oder die Räder, deren Drehzahl abgetastet werden sollen, brauchen nicht in bestimmte Umfangspositionen bewegt zu werden, um das erfindungsgemäß vorgeschlagene Verfahren anwenden zu können. Das vorgeschlagene Verfahren kann sowohl in Softwareform, als auch durch Hardwarekomponenten verwirklicht werden, wobei der Aufwand an Hardwarekomponenten als gering einzustufen ist. Die unabhängig voneinander zu durchlaufenden Prüfbedingungen erlauben eine sichere Detektion von Geschwindigkeitsänderungsphasen, d.h. Beschleunigung und Verzögerung, so daß diese von auftretenden Fehlern unterscheidbar sind. Die Prüfroutine mit zwei voneinander unabhängigen Vergleichen, kann über mehrere Radumdrehungen durchgeführt werden, so daß sich eine einfach ausgestaltete Filterung realisieren läßt. Mit dem erfindungsgemäß vorgeschlagenen Verfahren läßt sich das Fehlen einzelner Pole und/oder ganzer Polsegmente einfach erkennen.

Es ist eine Bewertung jedes einzelnen Rades des Kraftfahrzeuges unabhängig von den anderen Rädern möglich, so daß sich sehr leicht pro Rad Einstreuungen von wahren Signalfehlern unterscheiden lassen.

### Zeichnung

Anhand der Zeichnung wird die Erfindung nachstehend näher erläutert:

Es zeigt:
- Figur 1: ein Signalbild mit einem Impulsaussetzer bei t₅ und sich einstellender längerer Impulspause,
- Figur 2: ein Flußdiagramm, welches durchlaufen wird, um an einem Polrad mit 48 Polen Fehler zu detektieren und in Speichermedien abzulegen.

### Ausführungsvarianten

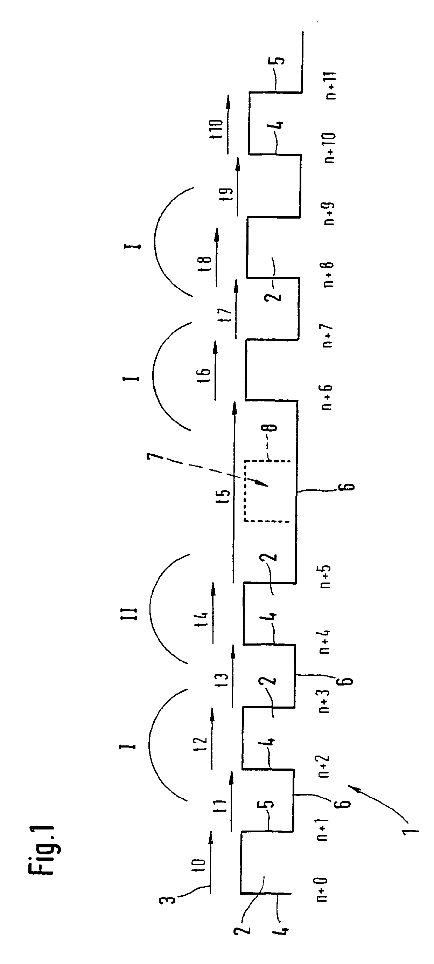

In Figur 1 ist ein Signalbild wiedergegeben, in welchem eine sich einstellende länger andauernde Impulspause über die Zeitspanne tₙ = t₅ enthalten ist.

Die von den Polen am Umfang eines Polrades mit beispielsweise 48 Polen erzeugten Impulsfolge ist in Figur 1 mit dem Bezugszeichen 1 bezeichnet. Die von links nach rechts sich einstellende von n aus ansteigende Impulsanzahl, läßt sich in Impulse 2 und in Impulspausen 6 unterteilen. Im dargestellten Ausführwigsbeispiel kennzeichnen die geraden Indizes Impulse 2, während die Impulspausen 6 durch ungerade Indizes jeweils gekennzeichnet sind. Die Impulse 2 sind durch jeweils eine senkrecht ansteigende Flanke 4 und eine senkrecht abfallende Flanke 5 gekennzeichnet.

Während er bei n = 5 über die Zeitspanne t₅ andauernden Impulspause 6 ist ein Signalaussetzer aufgetreten. Der gestrichelt eingezeichnete Impuls 8 ist ausgeblieben, wodurch sich die Impulspause 6 bei t = t₅ auf ein vielfaches ihrer ursprünglichen Länge vergrößert hat. Danach schließt sich mit t = t₆ beginnend eine regelmäßige Abfolge aus Impulsen 2 und Impulspausen 6 in der Signalabfolge 1 an.

Die mit I bzw. II bezeichneten Bögen oberhalb der dargestellten Signalabfolge 1 und Impulsabfolge geben an, welche Vergleichsvorgänge durchgeführt werden. Mit der Prüfbedingung I wird ermittelt, ob eine Geschwindigkeitsänderung des abzuprüfenden Rades vorliegt oder nicht. Es wird untersucht, ob die Bedingungen t₁ < 2 x t₃ und t₃ < 2 x t₁ erfüllt ist. Ist diese Bedingung erfüllt, liegt keine Geschwindigkeitsänderung des Rades vor, das entsprechende Rad wird mit konstanter Umfangsgeschwindigkeit bewegt. Ist die Bedingung hingegen nicht erfüllt, so befindet sich das Rad entweder in einer Beschleunigungs- oder einer Verzögerungsphase. Diese im Rahmen des ersten Schrittes erfolgende Vergleichsoperation wird auch für die weiter fortgeschrittenen Bereiche der Signalabfolge 1 durchgeführt, etwa t₇ < 2 x t₉ und t₉ < 2 x t₇. Aus der Erfüllung dieser Gleichheitsbedingung wird die Information gewonnen, daß keine Änderung der Geschwindigkeit am betreffenden Rad zu konstatieren ist, da die Impulslängen 3 jeweils gleich sind.

Zusätzlich zu den in der ersten Vergleichsoperation abgeprüften Kriterien, wird in einer Vergleichsoperation II im Rahmen eines Vergleiches ein Ungleichheitskriterium abgeprüft. Es wird geprüft, ob t₅ > 2 x t₃ und t₅ > 2 x t₇ beträgt. Wenn diese Ungleichheitsbedingung erfüllt ist, ist es mit hoher Wahrscheinichkeit zu einem Signalaussetzer gekommen. Der Signalaussetzer ist in Figur 1 durch den nicht vorliegenden Impuls 8 in gestrichelter Darstellung kenntlich gemacht. Dadurch hat die Impulsspanne 6 eine deutlich längere Dauer angenommen die, im Idealfall zumindest 2 x tₙ betragen kann und dies zur Auswertung einer Ungleichheitsbedingungen herangezogen werden kann.

Innerhalb der Vergleichsoperation I, umfassend jeweils die beiden Vergleiche t₁ < 2 x t₃ und t₃ < 2 x t₁ bzw. t₇ < 2 x t₉ und t₉ < 2 x t₇, wird das Vorliegen einer Geschwindigkeitsänderung festgestellt, während die zweite Vergleichsoperation mit den Bedingungen t₅ > 2 x t₃ sowie t₅ > 2 x t₇ operiert. Im Rahmen der II. Vergleichsoperation wird festgestellt, ob die Länge der Impulsdauer bei t₅ jeweils eine Mindestlänge übersteigt, welche durch den Faktor 2 bestimmt und vorgegeben werden kann. Die bevorzugte Verwendung des Faktors 2 rührt daher, daß bei idealem Taktverhältnis die Dauer der Impulspause 6 bei n = n+5 : 3 x tₙ betragen müßte. Bei Zugrundelegung realer Verhältnisse ist von Taktverhältnissen zwischen 0,3 und 0,7 auszugehen, weshalb als Mindestkriterium, ab der die Länge 3 der Impulspause 6 als zulange andauernd anzusehen ist, t₅ > 2 x tₙ anzusetzen ist.

Die beiden Vergleichsoperationen I bzw. II gemäß des erfindungsgemäß vorgeschlagenen Verfahrens sind unabhängig voneinander durchführbar, da ein Signalfehler zu zwei Zeitpunkten detektierbar ist, nämlich erstmals bei seinem Auftreten und erneute bei seinem Verschwinden. Die Unabhängigkeit der Vergleichsoperationen I und II voneinander ist deshalb erforderlich, weil die Länge der Fehler, im Beispiel die Länge 3 der Impulspause 6 nicht bekannt ist, ebensowenig wie die Anzahl der fehlenden Flanken bekannt ist. Durch die Unabhängigkeit beider Vergleichsoperationen I, II voneinander, lassen sich sowohl mehrere Fehler-Pakete oder Segmente innerhalb einer Signalabfolge detektieren, ebenso wie sich demgegenüber auch Gut-Pakete oder Segmente am Polrad detektieren lassen, die weder beschädigt noch verschmutzt sind.

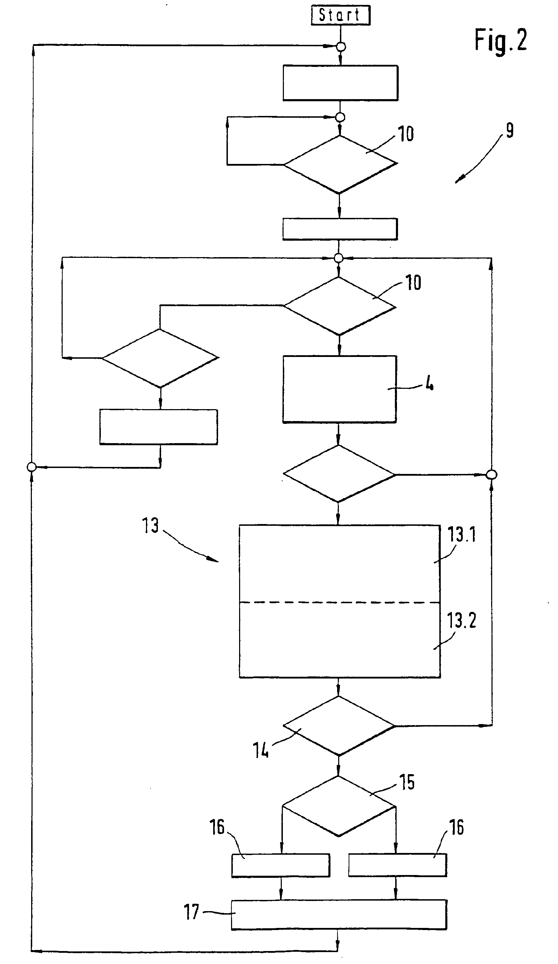

Die Darstellung gemäß Figur 2 zeigt ein Flußdiagramm, welches durchlaufen wird, um an einem Polrad mit beispielsweise 48 Polen Fehler zu detektieren und in einem Speichermedium abzulegen.

Im Flußdiagramm 9 gemäß Figur 2 ist dargestellt, daß mittels eines Flankendetektors 10 eine Erkennung der Flanken 4, 9 der Impulse 2 erfolgt und diese innerhalb eines Zeitspeichers 11 hochgezählt werden, entsprechend der gezählten Abfolge gemäß n = n+1, n+2 .... Erst ab Feststellung einer Anzahl von acht Flanken, die sich am Impulsgeber vorbeibewegt haben, erfolgen die im Zusammenhang mit Figur 1 geschilderten Vergleichsvorgänge I bzw. II innerhalb der Vergleichsroutine 13. Die Vergleichsroutine 13 läßt sich grob in zwei Speicherbereiche 13.1 bzw. 13.2 unterteilen. Im ersten Speicherbereich 13.1 laufen die Teilvergleiche gemäß der Vergleichsoperationen I, II ab, die in Figur 1 vor dem nicht vorliegenden Signal 8 in der Signalabfolge 1 eingezeichnet sind, während im Speicherbereich 13.2, die in der Signalabfolge 1, rechts neben dem ausgebliebenen Signal 8 erfolgenden Vergleichsoperationen I und II durchgeführt wird.

Die Vergleichsroutine 13 ist solange aktiv, bis bei einem 48-poligen Polrad 96 Flanken 4, 5 ausgewertet sind, was einer vollständigen Radumdrehung entspricht. Dies wird in einem Umdrehungszähler 14 ausgewertet, von dem aus entweder zurückverzweigt wird oder die Speicherbereiche 13.1 bzw. 13.2 ausgewertet werden.

Die in beiden Speichermedien abgelegten Fehlerinformationen 16 lassen sich über eine Anzeige 17 anzeigen und ausgeben. Der Verlauf des Verfahrens gemäß des Flußdiagrammes 9, läßt sich für jedes Rad unabhängig durchführen, auch summiert über mehrere Umdrehungen des Rades, so daß sich Einstreuungen sehr leicht von wahren Signalfehlern unterscheiden lassen.

### Bezugszeichenliste

- 1: Impulsfolge
- 2: Impuls
- 3: Impulslänge
- 4: Impulsflanke
- 5: Impulsflanke
- 6: Impulspause
- 7: Signalaussetzer
- 8: nicht vorliegendes Signal
- 9: Flußdiagramm
- 10: Flankendetektor
- 11: Zeitenspeicher
- 12: Flankenzähler
- 13: Vergleichsroutine
- 13.1: erster Speicherbereich
- 13.2: zweiter Speicherbereich
- 14: Umdrehungszähler
- 15: Auswertung
- 16: Fehler
- 17: Fehleranzeige

- I: Gleichheitsvergleich
- II: Ungleichheitsvergleich

## Patentansprüche

1. Verfahren zur Erkennung von Drehzahlsignalfehlern, wobei Impulse (t_{0,} t₂, t₄, t₆, t₈ sowie t₁₀) und Impulspausen (t₁, t₃, t₅, t₇, t₉) durch Drehzahlsignale erzeugende Pole generiert werden, die am Umfang eines Polrades angeordnet sind, **dadurch gekennzeichnet, dass** innerhalb eines ersten zulässigen Toleranzbereiches
- in einem ersten Schritt zur Feststellung einer Geschwindigkeitsänderung zwei aufeinander folgende Impulspausen (t₁, t₃, t₇, t₉) auf Gleichheit und
- in einem zweiten Schritt eine Impulspause (t₁, t₃, t₇, t₉) mit der vorangegangen bzw. nachfolgenden Impulspause auf Ungleichheit
in Bezug auf die Dauer während einer Radumdrehung verglichen werden,
wobei vorgesehen ist, dass
- innerhalb des ersten Schrittes die Bedingung t₍ₙ₊₁₎ < X x t₍ₙ₊₃₎ und t₍ₙ₊₃₎ < X x t₍ₙ₊₁₎ zur Ermittlung der Geschwindigkeitsänderung und
- innerhalb des zweiten Schrittes die Bedingungen t₍ₙ₊₅₎ > X x t₍ₙ₊₃₎ und t₍ₙ₊₅₎ > X x t₍ₙ₊₇₎
abgeprüft wird, wobei X einen vorgebbaren Faktor darstellt.

2. Verfahren gemäß Anspruch 1, **dadurch gekennzeichnet, dass** innerhalb des ersten Schrittes die Bedingung t₍ₙ₊₇₎ < 2 x t₍ₙ₊₉₎ und t₍ₙ₊₉₎ < 2 x t₍ₙ₊₇₎ zur Ermittlung der Geschwindigkeitsänderung abgeprüft wird.

3. Verfahren gemäß der Ansprüche 1 oder 2, **dadurch gekennzeichnet, dass** der Faktor X den Wert 2 annimmt.

4. Verfahren gemäß Anspruch 1 oder 2, **dadurch gekennzeichnet, dass** der Faktor X unter Zugrundelegung eines Tastverhältnisses zwischen 0,3 und 0,7 den Wert 2 annimmt.

5. Verfahren gemäß einem oder mehreren der vorhergehenden Ansprüche, **dadurch gekennzeichnet, dass** auf das Vorliegen eines Signalfehlers geschlossen wird, wenn dieser zweimal ermittelt wird.

6. Verfahren gemäß einem oder mehreren der vorhergehenden Ansprüche, **dadurch gekennzeichnet, dass** der erste Schritt und der zweite Schritt unabhängig voneinander durchgeführt werden.

## Claims

1. Method for detecting rotational speed signal errors, pulses (t₀, t₂, t₄, t₆, t₈ and t₁₀) and interpulse pauses (t₁, t₃, t₅, t₇, t₉) being generated by poles which generate rotational speed signals and are arranged on the circumference of a pole wheel, **characterized in that**, within a first admissible tolerance range,
- in a first step for determining a change in speed two successive interpulse pauses (t₁, t₃, t₇, t₉) are compared to determine whether they are equal and
- in a second step one interpulse pause (t₁, t₃, t₇, t₉) is compared with the preceding or subsequent interpulse pause to determine whether they are unequal
with respect to the duration during one revolution of the wheel, it being provided that,
- within the first step the condition t-₍ₙ₊₁₎ <Xxt₍ₙ₊₃₎ and t₍ₙ₊₃₎<Xxt₍ₙ₊₁₎ for identifying the change in speed is checked, and
- within the second step the conditions t-₍ₙ₊₅₎>Xxt₍ₙ₊₃₎ and t₍ₙ₊₅₎ > Xxt₍ₙ₊₇₎ are checked
where X constitutes a predefinable factor.

2. Method according to Claim 1, **characterized in that** within the first step the condition t₍ₙ₊₇₎<2xt₍ₙ₊₉₎ and t₍ₙ₊₉₎<2xt₍ₙ₊₇₎ for identifying the change in speed is checked.

3. Method according to one of Claims 1 or 2, **characterized in that** the factor X assumes the value 2.

4. Method according to Claim 1 or 2, **characterized in that** the factor X assumes the value 2 taking a pulse duty factor between 0.3 and 0.7 as the basis.

5. Method according to one or more of the preceding claims, **characterized in that** the presence of a signal error is concluded if it is identified twice.

6. Method according to one or more of the preceding claims, **characterized in that** the first step and the second step are carried out independently of one another.

## Revendications

1. Procédé pour reconnaître des erreurs de signaux, selon lequel des impulsions (t₀, t₂, t₄, t₆, t₈, t₁₀) et des pauses d'impulsions (t₁, t₃, t₅, t₇, t₉) sont générées par des pôles disposés sur la périphérie d'une roue polaire et qui produisent des signaux de vitesse de rotation,
**caractérisé en ce qu'**
à l'intérieur d'une première zone de tolérances admissibles, pendant une rotation de la roue, on compare en durée :
- dans une première étape servant à déterminer une variation de la vitesse, l'égalité de deux pauses d'impulsions consécutives (t₁, t₃, t₇, t₉),
- dans une deuxième étape l'inégalité d'une pause d'impulsions (t₁, t₃, t₇, t₉) avec la pause qui précède et avec la pause qui suit, et
on vérifie
- à l'intérieur de la première étape, que la condition t₍ₙ₊₁₎< X x t₍ₙ₊₃₎ et la condition t₍ₙ₊₃₎ < X x t₍ₙ₊₁₎ sont satisfaites pour déterminer la variation de la vitesse,
- à l'intérieur de la deuxième étape, que la condition t₍ₙ₊₅₎> X x t₍ₙ₊₃₎ et la condition t₍ₙ₊₅₎ > X x t₍ₙ₊₇₎ sont satisfaites,
- X représentant un facteur prédéfini.

2. Procédé selon la revendication 1,
**caractérisé en ce qu'**
à l'intérieur de la première étape, on vérifie que la condition t₍ₙ₊₇₎ < 2 x t₍ₙ₊₉₎ et la condition t₍ₙ₊₉₎ < 2 x t₍ₙ₊₇₎ sont satisfaites pour déterminer la variation de la vitesse.

3. Procédé selon la revendication 1 ou 2,
**caractérisé en ce que**
le facteur X prend la valeur 2.

4. Procédé selon la revendication 1 ou 2,
**caractérisé en ce que**
le facteur X, sur la base d'un taux d'impulsions compris entre 0,3 et 0,7, prend la valeur 2.

5. Procédé selon une ou plusieurs des revendications précédentes,
**caractérisé en ce qu'**
on conclut qu'il y a une erreur de signal quand cette erreur est établie deux fois.

6. Procédé selon une ou plusieurs des revendications précédentes,
**caractérisé en ce que**
la première et la deuxième étape sont effectuées indépendamment l'une de l'autre.
